# FASCICULE DE BREVET EUROPEEN

(11) **EP 1 545 079 B1**
(45) Date de publication et mention de la délivrance du brevet: **18.10.2006**
(21) Numéro de dépôt: 04292957.0
(22) Date de dépôt: 09.12.2004
(51) Int. Cl.: H04L 12/56

(54) **Procédé d'établissement d'une connexion logique entre un noeud de départ et un noeud d'arrivée non adjacents d'un réseau de télécommunications**
Verfahren zur Errichtung einer logischen Verbindung zwischen einem Startknoten und einem Endknoten, die nicht angrenzen innerhalb eines Telekommunikationsnetzwerkes
Method for establishing a virtual connexion between a start node and an end node non adjacents within a telecommunications network

(30) Priorité: 19.12.2003 FR 0314981
(43) Date de publication de la demande: 22.06.2005
(73) Titulaire: ALCATEL, 75008 Paris (FR)
(72) Inventeur: Vigoureux, Martin, 75015 Paris (FR); Dotaro, Emmanuel, 91370 Verrières le Buisson (FR)
(74) Mandataire: Fournier, Michel Robert Marie

(56) Documents cités:
- WO-A-03/079596
- US-A1- 2003 198 227

## Description

L'invention concerne un procédé d'établissement d'une connexion logique entre un noeud de départ et un noeud d'arrivée non adjacents d'un réseau de télécommunications.

Un réseau de télécommunications est classiquement constitué d'un ensemble de noeuds et reliés deux à deux par des liens.

Dans les réseaux à commutation de circuit ou orientés connexion, il est nécessaire d'établir une connexion entre le noeud de départ et le noeud d'arrivée afin de permettre l'acheminement des données clients (voix, vidéo,...).

L'établissement d'une connexion est assurée par le plan de contrôle du réseau, de type logiciel, en s'appuyant sur une représentation du réseau.

De façon connue, voir par exemple US 2003/98227 A1, le procédé d'établissement de la connexion s'articule en deux phases comme suit:
- une phase de routage c'est-à-dire de détermination d'une route spatiale reliant le noeud de départ et le noeud d'arrivée, la route spatiale comprenant une pluralité de noeuds dit de transit intercalés entre les noeuds d'arrivée et de départ et donc une suite de segments de route reliant deux à deux les noeuds,
- une phase de signalisation qui comprend les étapes suivantes successives:

- émission, par le noeud de départ, d'une requête de réservation associée à la route spatiale, la requête contenant des valeurs de paramètres caractéristiques de la connexion, passant par tous les noeuds de transit prédéfinis qui vont ainsi stocker temporairement la requête de réservation,
- réception de la requête par le noeud d'arrivée, éventuellement complétée le long de la route,
- décision, par le noeud d'arrivée, des réservations effectives et émission d'un message retour de validation de ces réservations, lequel suit la route spatiale en sens inverse jusqu'au noeud de départ.

Cependant, lorsqu'un noeud constate qu'il ne peut répondre aux critères pour l'établissement de la connexion, ce dernier renvoie un message d'erreur arrière et tout le procédé de recherche doit être relancé.

Par ailleurs, la requête contient par exemple des indications sur la route spatiale, sur le type de connexion, ou sur les besoins en bande passante pour chaque noeud de transit.

Cette requête peut devenir très volumineuse au fur et à mesure de sa progression en particulier lorsqu'elle contient des informations nécessaires au calcul d'une ou plusieurs routes spectrales.

En effet, dans le cas du réseau constitué de noeuds à commutation optique par longueurs d'onde, on détermine non seulement la route spatiale, mais aussi une route spectrale, puisque chaque segment de route spatiale peut supporter une pluralité de longueurs d'ondes constituant chacune un segment de route spectrale. Choisir une route spectrale consiste ainsi à choisir la (bande de) longueur d'onde, ou les (bandes de) longueurs d'onde, à utiliser successivement sur différents segments, le long de la route spatiale.

Le choix de la route spectrale est généralement réalisé par le noeud d'arrivée à partir des informations contenues dans la requête.

Aussi, dans la phase de signalisation, des informations en grande quantité sont à gérer (disponibilité, continuité en longueur d'onde etc) pour établir correctement la connexion.

Il peut y avoir de plus des contraintes de capacité de liaison ou des contraintes de qualité de service qui influent le choix final de la route spectrale.

Le but de l'invention est de proposer dans un procédé d'établissement d'une connexion logique une phase de signalisation sûre et rapide entre un noeud de départ et un noeud d'arrivée non adjacents d'un réseau de télécommunications à commutation(s) optique(s) et/ou électrique(s).

A cet effet l'invention propose un procédé comportant les étapes suivantes successives:
- détermination d'une route spatiale reliant le noeud de départ et le noeud d'arrivée, la route spatiale comprenant au moins un noeud dit de transit intercalé entre les noeuds d'arrivée et de départ et une suite de segments de route reliant deux à deux lesdits noeuds,
- émission, par le noeud de départ, d'une requête de réservation associée à la route spatiale, la requête contenant des valeurs de paramètres caractéristiques de la connexion, transitant au moins par le premier noeud de transit de la route spatiale et ayant comme destination finale le noeud d'arrivée,
**caractérisé en ce qu**'il comprend en outre l'étape suivante :
- calcul automatique par un noeud de transit dit noeud décisionnel sur la base d'informations locales, le résultat du calcul étant apte à modifier l'une au moins desdites valeurs de paramètres de connexion.

Le calcul automatique peut être réalisé par un ou plusieurs noeuds décisionnels successifs de la route spatiale. Chaque calcul permet de tenir compte des informations locales c'est-à-dire non distribuées dans le réseau et généralement plus fraîches et complètes.

Le procédé privilégie la réalisation d'un calcul intermédiaire à l'envoi systématique d'un message retour d'erreur lorsque l'établissement de la connexion semble impossible. En effet, le ou les noeuds décisionnels ont autorité pour modifier les paramètres de connexion afin de maximiser la réussite de son établissement.

La ou les ressources à réserver sont par exemple, par ordre de granularité croissante: une couche de niveau 2, un bloc de type SDH (Synchronous digital Hierarchy en anglais) ou SONET (Synchronous Optical NETwork en anglais, une longueur d'onde, une bande de longueur d'onde, une fibre optique, plus généralement de la bande passante.

Dans un mode de réalisation, le procédé comprend un traitement de la requête par un noeud décisionnel à partir dudit calcul.

Chaque traitement de la requête peut consister en une implémentation du résultat du calcul et de préférence impliquer une synthèse de valeurs de paramètres de connexion, par exemple pour réduire la taille du message et/ou simplifier le(s) calcul(s) effectué(s) par le noeud d'arrivée.

En synthétisant des valeurs de paramètres caractéristiques de la connexion, tels que des informations spectrales, chaque calcul va ainsi alléger le traitement final global réalisé par le noeud d'arrivée et en outre permettre un gain en temps de calcul.

Le choix du ou des noeuds décisionnels peut être réalisé lors de la détermination de la route spatiale ou par une autodétermination.

Le calcul peut être effectué sur la base d'informations locales en relation avec l'un au moins des critères suivants : la taille maximale de requête transmissible, la disponibilité de partage de ressources, la politique locale mise à disposition par un plan de gestion du réseau (managment plane en anglais), une panne, la protection du réseau, la qualité de service (gestion des connexions prioritaires et/ou des trafics prioritaires).

Ainsi, le noeud décisionnel est capable de modifier la requête en fonction des événements.

Le résultat du calcul peut impliquer une modification de segment(s) de la route spatiale à partir du noeud décisionnel.

Une modification intervient par exemple entre deux noeuds décisionnels adjacents (séparés ou non par de simples noeuds de transits) ou entre le dernier noeud décisionnel et le noeud d'arrivée.

A titre d'exemple la modification peut être un remplacement d'un ou plusieurs noeuds de transit par un ou plusieurs autres noeuds du réseau.

Par ailleurs, il est parfois nécessaire d'effectuer des opérations sur le signal porteur des données utiles à transmettre et/ou les données elles mêmes, nécessitant l'utilisation d'équipements spécifiques dans le réseau.

Ces opérations peuvent concerner la régénération et/ou la conversion de longueur d'onde qui peuvent être réalisées par des moyens purement optiques ou par des moyens de conversion optique-électrique et de conversion électrique-optique.

On parle de « continuité de longueur d'onde » quand la même longueur d'onde est utilisée du noeud de départ au noeud d'arrivée, même si des opérations sur le signal porteur des données et/ou les données transportées nécessitent des conversions optique - électronique - optique, ou des régénérations 1 R, ou 2R, 3R.

On parle de « transparence », en distinguant plusieurs types de transparence, selon que l'on évite les conversions optique - électronique - optique, ou les conversions de longueur d'onde, ou les régénérations 1 R, ou 2R, 3R, ou une combinaison de ces opérations.

Aussi, dans un réseau au moins partiellement transparent - par exemple un réseau tout optique ou hybride et non un réseau opaque - chaque segment de route spatiale peut être apte à supporter une pluralité de longueurs d'onde qui constitue chacune un segment de route spectrale.

Le procédé peut alors comprendre de préférence une étape de détermination de route(s) spectrale(s) candidate(s), pour la route spatiale éventuellement modifiée, incluant:
- la détermination, à partir du calcul dans au moins un noeud décisionnel dit de traitement, d'au moins un chemin spectral entre le noeud décisionnel de traitement et un précédent noeud décisionnel sur la route ou le cas échéant le noeud de départ.

Tout chemin spectral est donc calculé pour deux noeuds décisionnels de traitement adjacents (séparés ou non par un ou des noeuds de transit) ou entre le noeud de départ et le premier noeud décisionnel de traitement (séparés ou non par un ou des noeuds de transit). Le chemin spectral peut être subdivisé en segments spectraux.

Chaque chemin spectral peut être défini avec un grand degré de liberté par exemple il n'est pas nécessaire de choisir toutes les longueurs d'ondes déjà proposées pour un chemin spectral en amont.

Ainsi, la route spectrale n'est pas entièrement calculée par le noeud d'arrivée qui utilise des informations précalculées par les noeuds décisionnels.

Dans un premier mode de réalisation, chaque noeud décisionnel est un noeud décisionnel de traitement et le procédé comprend en outre :
- l'ajout éventuel, dans ladite requête, d'informations sur la connexion collectées dans au moins un noeud de transit,
- l'envoi, de préférence par le noeud d'arrivée, d'un message retour de façon à valider la réservation de longueur(s) d'onde, ledit message arrivant dans le dernier noeud décisionnel en indiquant la configuration nécessaire pour le dernier chemin spectral situé entre le dernier noeud décisionnel et ledit noeud d'arrivée,
- le cas échéant la sélection, par le dernier noeud décisionnel, du meilleur chemin spectral parmi l'ensemble des chemins spectraux candidats déterminés,
- l'envoi, par le dernier noeud décisionnel, dudit message retour de façon à valider la réservation de longueur(s) d'onde, le message étant complété en indiquant en outre la configuration nécessaire pour ledit meilleur chemin spectral et arrivant dans l'avant-dernier noeud décisionnel ou le cas échéant le noeud de départ, ,
- le cas échéant, l'ajout d'étapes similaires aux deux étapes précédentes pour chacun des noeuds décisionnels restants jusqu'à l'obtention de la validation de la réservation de longueur(s) d'onde dans le noeud de départ.

Dans un deuxième mode de réalisation, l'étape de détermination de route(s) spectrale(s) candidate(s) comprend en outre :
- l'ajout dans la requête par ledit au moins noeud décisionnel de traitement, d'informations relatives audit ou auxdits chemins spectraux déterminés,
- la sélection par ledit noeud d'arrivée, des meilleurs chemins spectraux parmi les chemins spectraux proposés par ledit au moins noeud décisionnel de traitement ,
- l'émission par le noeud d'arrivée, d'un message retour de façon à valider la réservation de longueur(s) d'onde jusqu'au noeud de départ.

De manière avantageuse, ce message retour contient les informations appropriées pour la configuration de chaque noeud décisionnel et pour la configuration du ou des noeuds éventuels de transits éventuellement modifiés.

L'invention sera mieux comprise et d'autres caractéristiques apparaîtront à l'aide de la description ci-dessous et des figures l'accompagnant :
- la figure 1 représente un exemple de réseau de télécommunications dans lequel le procédé selon l'invention peut être mis en oeuvre,
- les figures 2 à 5 illustrent une première mise en oeuvre du procédé selon l'invention, dans l'exemple du réseau représenté sur la figure 1,
- la figure 6 représente une seconde mise en oeuvre du procédé selon l'invention, dans l'exemple de réseau représenté sur la figure 1.

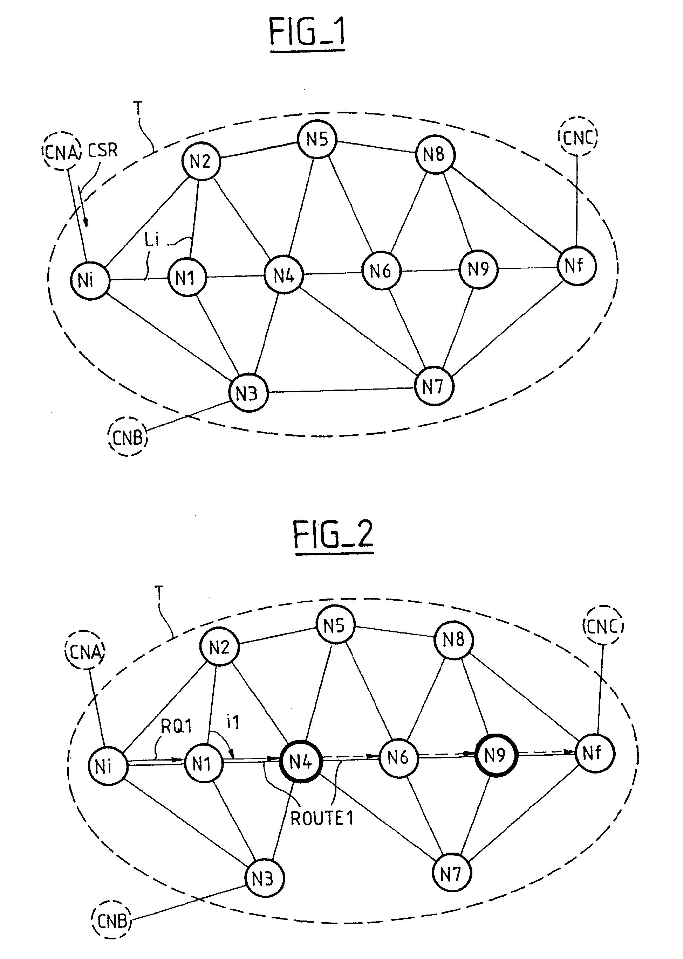

L'exemple de réseau T représenté sur la figure 1 comporte des noeuds Ni, N1 à N9, Nf à commutation optique, par exemple par (bandes de) longueurs d'onde, et interconnectés deux à deux par des liaisons bidirectionnelles Li.

Chaque liaison Li comporte de préférence une pluralité de fibres optiques, chacune de ces fibres optiques pouvant comporter une pluralité de longueurs d'onde regroupées dans une ou plusieurs bandes. Par exemple, une liaison peut contenir cinq longueurs d'onde disponibles.

Dans cet exemple, le réseau T permet d'interconnecter trois réseaux clients CNA, CNB, CNC qui sont reliés respectivement aux noeuds Ni, N3, Nf situés à la périphérie du réseau T. La mise en oeuvre du procédé selon l'invention est faite dans le réseau T et est totalement indépendante du nombre et de la nature de ces réseaux clients.

Une requête d'établissement de connexion CSR est émise par exemple par le réseau client CNA vers le noeud Ni afin d'établir une connexion entre les réseaux clients CNA et CNC.

Pour décrire l'établissement de cette connexion, le noeud Ni est qualifié de noeud de départ, le noeud Nf de noeud d'arrivée.

La requête CSR contient l'identité du réseau client demandeur CNA et du réseau client demandé CNC, et mentionne par exemple des contraintes de transparence, de capacité, de qualité de services, etc...

Le réseau T doit de préférence déterminer une route transparente, et si ce n'est pas possible, une route comportant le moins possible de points de non-transparence en respectant les contraintes de capacité et de qualité de services, fixées pour cette connexion.

Les contraintes sur les paramètres de transparence optique peuvent être des valeurs de longueur d'onde, d'espacement spectral, mais aussi de tolérance sur les effets de la non-linéarité (mélange quatre ondes, etc), une obligation d'absence de régénération, etc...

La figure 2 illustre une première mise en oeuvre du procédé d'établissement d'une connexion, lequel est appliqué à la connexion précitée.

A la réception de la requête d'établissement de connexion, le réseau T traduit les contraintes mentionnées dans la requête de connexion en contraintes portant sur le routage.

Le réseau T comprend classiquement un plan de contrôle et un plan de transport. Dans chaque noeud Ni, Nf, N1 à N9 sont implémentés des moyens logiciels pour le protocole OSPF-TE (Open Short Path First-Traffic Engineering en anglais) défini par l'IETF (Internet Engineering Task Force en anglais).

Le plan de contrôle du réseau T, détermine en fonction de la topologie et de la connectivité du réseau T, une route spatiale reliant le réseau client CNA au réseau client CNC et qui comprend les noeuds de départ et d'arrivée, les noeuds de transit et les liens, autrement qualifiés des segments de route.

La figure 2 montre la route spatiale ROUTE1, satisfaisant le mieux à toutes les contraintes de routage qui sont mentionnées dans la demande initiale d'établissement de connexion CSR :

La route ROUTE1 comprend des noeuds dits de transits N1, N4, N6, N9 entre les noeuds de départ et d'arrivée Ni, Nf.

Le noeud de départ Ni sélectionne un ou plusieurs noeuds de transit et les autorise à prendre, si nécessaire, une décision relative à l'établissement de la connexion, sur la base d'informations locales à ces noeuds.

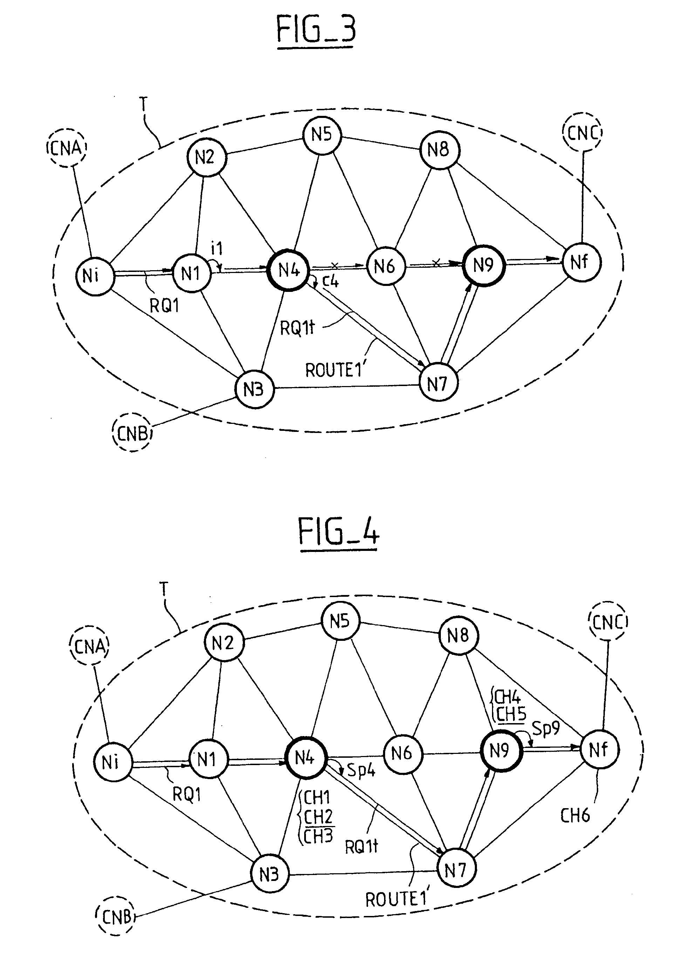

Les noeuds sélectionnés N4, N9, qualifiés de noeuds décisionnels, (symbolisés par un trait épais sur les figures 3 à 5) comprennent des moyens de calculs automatiques qui sont activés contrairement à des moyens similaires éventuellement présents dans les autres noeuds de transit.

Dans une variante, les noeuds décisionnels sont capables de s'autodéterminer, une requête, par exemple trop volumineuse, pouvant engendrer une prise de décision.

Le noeud de départ Ni émet ensuite une requête de réservation RQ1, adressée au noeud de d'arrivée Nf, et normalement acheminée sur la route spatiale ROUTE1.

Cette requête contient les valeurs de paramètres caractéristiques de la connexion tels que la bande passante requise, l'encodage des données, le type de commutation, le niveau de protection, le type de protection, le noeud de départ, le noeud final, la priorité, le type de réservation.

L'acheminement selon cette route ROUTE1 est commandé par le noeud de départ Ni par exemple en fournissant la requête RQ1 à des moyens de signalisation du réseau T.

Tout noeud traversé par la requête de réservation RQ1 peut ajouter, au contenu de cette requête, des valeurs de paramètres concernant le segment de route immédiatement en amont et/ou en aval de ce noeud sur cette route spatiale, ou encore des valeurs de paramètres concernant les interfaces de ce noeud . Par exemple, le noeud N1 ajoute des informations spectrales i1 donnant le nombre de longueurs d'onde utilisables.

La requête RQ1, passe d'abord par le noeud N1 qui va stocker temporairement l'instruction de réservation de ressources, et est ensuite reçue par le premier noeud décisionnel N4.

Le premier noeud décisionnel N4 a par exemple la connaissance d'une panne telle qu'une rupture de fibre(s) entre lui-même N4 et le noeud N6. Afin de garder possible l'établissement de la connexion et d'assurer sa réalisation le plus rapidement possible, ce premier noeud décisionnel N4 effectue un calcul automatique visant à pallier cette panne.

Le résultat du calcul c4 amène ainsi à une modification de la route ROUTE1.

Comme montré en figure 3, ce noeud N4 décide du remplacement du noeud de transit N6 par un nouveau noeud de transit N7 - et des segments de route spatiale entre les noeuds N4 et N6 et entre les noeuds N6 et N9-, par les nouveaux segments de route spatiale entre les noeuds N4 et N7 et entre les noeuds N7 et N9.

Les informations c4 résultant de ce calcul c'est-à-dire indiquant la modification de la route spatiale ROUTE 1 sont introduites dans la requête de réservation RQ1 en remplacement des informations de routage initiales qui sont caduques. La requête traitée RQ1t est transmise le long de la route modifiée ROUTE 1' Par ailleurs, le premier noeud décisionnel N4 est aussi capable de calculer automatiquement un et de préférence plusieurs chemins spectraux amont, en tenant compte d'informations spectrales locales par exemple sur la transparence ou les disponibilités de bande passante.

Par exemple, ce calcul peut être déclenché si le noeud décisionnel N4 constate que les informations spectrales i1 collectées le long du noeud amont N1 rendent la requête RQ1 trop volumineuse ou encore si ce noeud décisionnel N4 constitue un point opaque du réseau T.

Aussi, en utilisant notamment les informations spectrales déjà collectées i1, le premier noeud décisionnel N4 est capable de déterminer par un calcul automatique par exemple trois chemins spectraux possibles CH1 à CH3 entre le noeud de départ Na et lui-même, un chemin spectral étant éventuellement subdivisé en plusieurs segments spectraux. Les informations spectrales sp4 résultant de ce calcul sont donc également introduites dans la requête traitée RQ1t en remplacement de toutes les informations spectrales i1. Cela simplifie la détermination de la route spectrale.

De même, le deuxième noeud décisionnel N9 est apte à calculer par exemple deux chemins spectraux possibles CH4, CH5 entre le premier noeud décisionnel N4 et lui-même. Les informations spectrales sp9 relatives à ces chemins sont également introduites dans la requête traitée RQ1t.

A la réception de la requête de réservation traitée RQ1t, le noeud d'arrivée Nf va uniquement calculer le meilleur dernier chemin spectral CH6 supporté par la route spatiale modifiée ROUTE1' et situé entre le deuxième noeud décisionnel N9 et lui-même.

Le noeud d'arrivée Nf sélectionne aussi les meilleurs chemins spectraux parmi les chemins spectraux CH1 à CH5 proposés par les noeuds décisionnels N4, N9. Par exemple, il sélectionne les chemins spectraux CH2 et CH5, (symbolisés par une référence soulignée en figure 4).

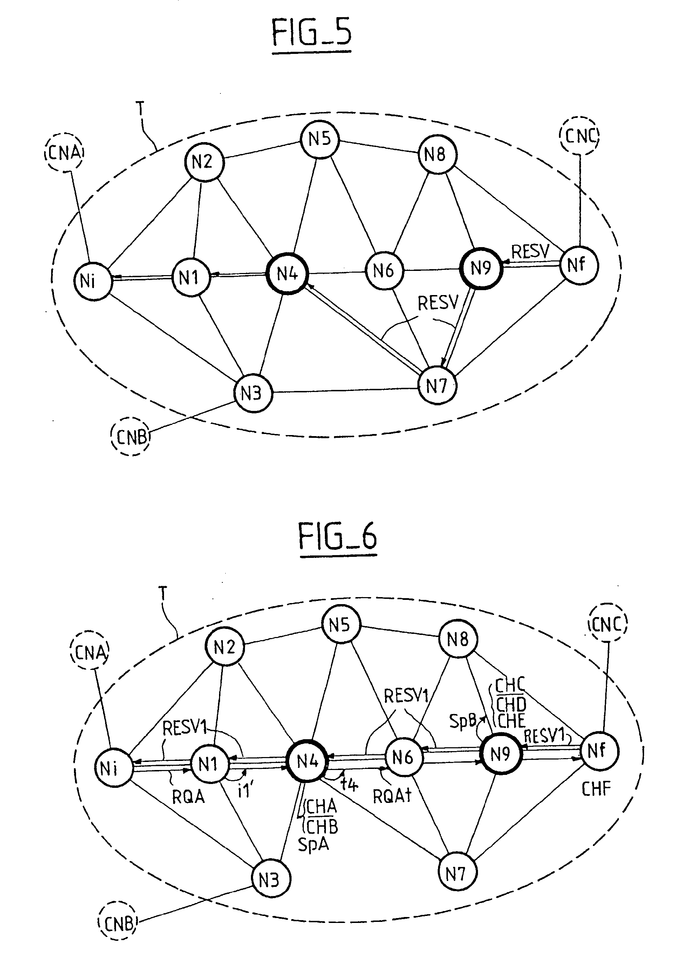

Comme montré en figure 5, le noeud d'arrivée Nf émet alors un message retour RESV de façon à valider la réservation de longueur(s) d'onde sur toute la route modifiée ROUTE1'.

Le message retour RESV contient dès son émission les informations appropriées pour la configuration des noeuds décisionnels N4, N9 et contient en outre des informations pour la configuration des nouveaux noeuds de transits N7, N1 et du noeud de départ Ni.

La figure 6 illustre une deuxième mise en oeuvre du procédé d'établissement d'une connexion, lequel est appliqué à la connexion précitée.

Seules les étapes distinctes de la première mise en oeuvre sont détaillées.

Les éléments communs aux deux modes de réalisation présentent les mêmes références.

A la réception de la requête d'établissement de connexion, le réseau T traduit les contraintes mentionnées dans la requête de connexion en contraintes portant sur le routage.

De manière similaire au premier mode, une route spatiale ROUTE1 est déterminée.

Le choix des noeuds décisionnels est réalisé ultérieurement par une autodétermination de(s) noeud(s) de transit par exemple sur la base d'informations locales. Par exemple, le noeud N1 traversé ajoute des informations i1' à la requête de réservation RQA et lorsque cette dernière atteint le noeud de transit N4, ce dernier constate que cette requête est trop volumineuse par rapport à la taille maximum transmissible ou à une taille fixée limite prédéterminée et décide lui-même de traiter la requête. Le noeud N4 effectue alors un calcul t4 pour modifier et synthétiser une ou des valeurs de paramètres de connexion par exemple en supprimant des informations spectrales.

Tandis que la requête ainsi comprimée RQAt continue la route ROUTE1, le noeud N4 utilise toutes les informations spectrales initialement présentes dans la requête RQA et les informations locales pour effectue un nouveau calcul automatique spA visant à déterminer des chemins spectraux possibles entre le noeud de départ Ni et lui-même, par exemple au nombre de deux CHA, CHB. Ce calcul intermédiaire spA justifie la suppression d'informations spectrales superflues dans la requête RQAt.

Un autre noeud N9 peut aussi décider de manière autonome de faire un calcul spB des chemins spectraux possibles entre le noeud décisionnel N4 et lui-même, par exemple au nombre de trois CHC, CHD, CHE.

A la réception de la requête de réservation RQAt, le noeud d'arrivée Nf va déterminer uniquement le dernier chemin spectral CHF situé entre lui-même et le dernier noeud décisionnel N9 effectuant un calcul de chemins spectraux.

Ensuite, le noeud d'arrivée Nf émet un message retour RESV1 adressé à ce dernier noeud décisionnel N9 pour valider la réservation de longueur(s) d'onde dans cet segment de route. Ce premier message RESV1, indique à ce dernier noeud décisionnel N9 la configuration nécessaire pour le dernier chemin spectral CHF.

Le dernier noeud décisionnel N9 sélectionne alors le meilleur chemin spectral, par exemple CHC (symbolisé par une référence soulignée en figure 6), parmi ceux qu'il a déjà calculés CHC à CHE. Il émet ensuite un le message retour de validation RESV1 qu'il a complété afin de permettre la configuration des noeuds traversés N6, N4, lequel arrive dans le premier noeud décisionnel N4.

De manière similaire, après réception du message retour de validation complété RESV, le premier noeud décisionnel N4 sélectionne le meilleur chemin spectral, par exemple CHA (symbolisé par une référence soulignée en figure 6), parmi ceux qu'il a déjà calculés CHA, CHB. Il émet ensuite le message retour de validation RESV à nouveau complété afin de permettre la configuration des noeuds traversés N1, Ni, et ce dernier arrive dans le noeud de départ Ni.

Dans le procédé décrit ci dessus, il n'y a pas d'envoi de message retour d'erreur par un noeud de transit lorsque l'établissement de la connexion est à priori impossible mais au contraire une correction des paramètres de connexion pour la rendre possible.

## Revendications

1. Procédé d'établissement d'une connexion logique entre un noeud de départ (Ni) et un noeud d'arrivée (Nf) non adjacents d'un réseau de télécommunications (T), le procédé comportant les étapes suivantes successives:
- détermination d'une route spatiale (ROUTE1) reliant le noeud de départ et le noeud d'arrivée, la route spatiale comprenant au moins un noeud dit de transit (N1, N4, N6, N9) intercalé entre les noeuds d'arrivée et de départ et une suite de segments de route reliant deux à deux lesdits noeuds,
- émission par le noeud de départ d'une requête de réservation (RQ1, RQA) associée à la route spatiale, la requête contenant des valeurs de paramètres caractéristiques de la connexion, transitant au moins par le premier noeud de transit (N1) de la route spatiale et ayant comme destination finale le noeud d'arrivée,
**caractérisé en ce qu**'il comprend en outre l'étape suivante:
- calcul automatique par un noeud de transit dit noeud décisionnel (N4, N9) sur la base d'informations locales, le résultat du calcul (c4, sp4, sp9, t4, spA, spB) étant apte à modifier l'une au moins des valeurs de paramètres de connexion.

2. Procédé d'établissement d'une connexion logique selon la revendication 1 **caractérisé en ce qu**'il comprend un traitement de la requête (RQ1, RQ1t, RQA) par le noeud décisionnel (N4, N9) à partir dudit calcul (c4, sp4, sp9, t4).

3. Procédé d'établissement d'une connexion logique selon la revendication 2 **caractérisé en ce que** le traitement de la requête (RQ1, RQ1t) consiste en une implémentation du résultat du calcul (c4, sp4, sp9) et de préférence implique une synthèse de valeurs de paramètres de connexion.

4. Procédé d'établissement d'une connexion logique selon l'une des revendications 1 à 3 **caractérisé en ce que** le choix du ou des noeuds décisionnels (N4, N9) est réalisé lors de la détermination de la route spatiale (ROUTE 1) ou par une autodétermination.

5. Procédé d'établissement d'une connexion logique selon l'une des revendications 1 à 4 **caractérisé en ce que** le calcul (c4, sp4, sp9, t4, spA, spB) est effectué sur la base d'informations locales en relation avec l'un au moins des critères suivants : la taille maximale de requête transmissible, la disponibilité de partage de ressources, la politique locale mise à disposition par un plan de gestion du réseau, une panne, la protection du réseau, la qualité de service.

6. Procédé d'établissement d'une connexion logique selon l'une des revendications 1 à 5 **caractérisé en ce que** le résultat du calcul (c4) implique une modification de segment(s) de la route spatiale (ROUTE1) à partir du noeud décisionnel (N4).

7. Procédé d'établissement d'une connexion logique selon l'une des revendications 1 à 6 **caractérisé en ce que**, chaque segment de route spatiale étant apte à supporter une pluralité de longueurs d'onde qui constitue chacune un segment de route spectrale, le procédé comprend une étape de détermination de route(s) spectrale(s) candidate(s) pour ladite route spatiale éventuellement modifiée (ROUTE1, ROUTE 1') incluant:
- la détermination à partir dudit calcul (sp4, sp9, spA, spB) dans au moins un noeud décisionnel (N4, N9) dit de traitement, d'au moins un chemin spectral (CH1 à CH5, CHA à CHE) entre ledit noeud décisionnel de traitement et un précédent noeud décisionnel (N4) sur la route ou le cas échéant le noeud de départ (Ni).

8. Procédé d'établissement d'une connexion logique selon la revendication 7 **caractérisé en ce que**, chaque noeud décisionnel (N4, N9) est un noeud décisionnel de traitement et **en ce que** le procédé comprend :
- l'ajout éventuel, dans la requête de réservation (RQA), d'informations (i1') sur la connexion collectées dans au moins un noeud de transit (N1),
- l'envoi d'un message retour (RESV1) de façon à valider la réservation de longueur(s) d'onde, ledit message, arrivant dans le dernier noeud décisionnel (N9) en indiquant la configuration nécessaire pour dernier chemin spectral (CHF) situé entre le dernier noeud décisionnel et ledit noeud d'arrivée (Nf),
- le cas échéant la sélection par le dernier noeud décisionnel (N9) du meilleur chemin spectral (CHC) parmi l'ensemble des chemins spectraux candidats déterminés (CHC à CHE),
- l'envoi, par le dernier noeud décisionnel (N9), du message retour (RESV2) de façon à valider la réservation de longueur(s) d'onde, le message étant complété en indiquant la configuration nécessaire pour ledit meilleur chemin spectral (CHC) et arrivant dans l'avant-dernier noeud décisionnel (N4) ou le cas échéant le noeud de départ,
- le cas échéant, l'ajout d'étapes similaires aux deux étapes précédentes pour chacun des noeuds décisionnels restants (N4) jusqu'à l'obtention de la validation de la réservation de longueur(s) d'onde dans le noeud de départ (Ni).

9. Procédé d'établissement d'une connexion logique selon la revendication 7 **caractérisé en ce qu**'il comprend :
- l'ajout dans la requête de réservation (RQ1t) par ledit au moins noeud décisionnel de traitement (N4, N9), d'informations relatives (sp4, sp9) audit ou auxdits chemins spectraux déterminés (CH1 à CH5),
- la sélection par ledit noeud d'arrivée (Nf) des meilleurs chemins spectraux parmi les chemins spectraux (CH2, CH5) proposés par ledit au moins noeud décisionnel de traitement,
- l'émission par ledit noeud d'arrivée (Nf) d'un message retour (RESV) de façon à valider la réservation de longueur(s) d'onde jusqu'au noeud de départ (Ni).

10. Procédé d'établissement d'une connexion logique selon la revendication 9 **caractérisé en ce que**, le message retour contient des informations appropriées pour la configuration de chaque noeud décisionnel (N4, N9) et contient en outre des informations pour la configuration du ou des noeuds éventuels de transits éventuellement modifiés (N1, N7).

## Claims

1. A method of setting up a logic connection between an initial node (Ni) and a final node (Nf) that are not adjacent to each other in a telecommunications network (T), the method comprising the following steps in succession:
- determining a spatial route (ROUTE 1) interconnecting the initial node and the final node, the spatial route comprising at least one "transit node" (N1, N4, N6, N9) interposed between the final node and the initial node and a succession of route segments interconnecting the nodes in pairs;
- the initial node sending a reservation request (RQ1, RQA) associated with the spatial route, the request containing values of parameters characteristic of the connection, passing through at least the first transit node (N1) of the spatial route, and having the final node as the final destination;
**characterized in that** it also comprises the following step:
- a "decision-taking" transit node (N4, N9) automatically performing a computation on the basis of local information, the computation result (c4, sp4, sp9, t4, spA, spB) being suitable for modifying at least one of the values of the connection parameters.

2. A method of setting up a logic connection according to claim 1 **characterized in that** it further comprises the decision-taking node (N4, N9) processing the request (RQ1, RQ1t, RQA) by using said computation (c4, sp4, sp9, t4).

3. A method of setting up a logic connection according to claim 2 **characterized in that** processing the request (RQ1, RQ1t) consists in implementing the computation result (c4, sp4, sp9) and preferably involves summarizing the values of the connection parameters.

4. A method of setting up a logic connection according to anyone of claims 1 to 3 **characterized in that** the choice of the decision-taking node(s) (N4, N9) is made during determination of the spatial route (ROUTE 1) or by self-determination.

5. A method of setting up a logic connection according to any one of claims 1 to 4 **characterized in that** the computation (c4, sp4, sp9, t4, spA, spB) is based on local information in relation with at least one of the following criteria: maximum transmittable request size, availability of resource sharing, local policy made available by a network management plane, a failure, network protection, and quality of service.

6. A method of setting up a logic connection according to any one of claims 1 to 5 **characterized in that** the computation result (c4) involves modifying segments along the spatial route (ROUTE1) starting from the decision-taking node (N4).

7. A method of setting up a logic connection according to any one of claims 1 to 6 **characterized in that**, with each segment of the spatial route being capable of carrying a plurality of wavelengths, each of which forms a spectral route segment, the method further comprises a step for determining one or more candidate spectral routes for said spatial route, possibly as modified (ROUTE1, ROUTE 1') said step including:
- determining, on the basis of said computation (sp4, sp9, spA, spB) in at least one "processing" decision-taking node (N4, N9), at least one spectral path (CH1 to CH5, CHA to CHE) between said processing decision-taking node and a preceding decision-taking node (N4) along the route or possibly the initial node (Ni).

8. A method of setting up a logic connection according to claim 7 **characterized in that** each decision-taking node (N4, N9) is a processing decision-taking node, and **in that** the method further comprises:
- optionally adding information (i1') about the connection that is collected in at least one transit node (N1) to the reservation request (RQA);
- sending a return message (RESV1) so as to validate the reservation of the wavelength(s), said message reaching the last decision-taking node (N9) and indicating the necessary configuration for the last spectral path (CHF) located between the last decision-taking node and said final node (Nf);
- if necessary, the last decision-taking node (N9) selecting the best spectral path (CHC) from among the set of determined candidate spectral paths (CHC to CHE);
- the last decision-taking node (N9) sending said return message (RESV2) so as to validate the reservation of the wavelength(s), the message being supplemented by also indicating the configuration necessary for said best spectral path (CHC) and reaching the penultimate decision-taking node (N4) or, possibly, the initial node; and
- if necessary, adding steps similar to the two previous steps for each of the remaining decision-taking nodes (N4) until the reservation of wavelength(s) is validated in the initial node (Ni).

9. A method of setting up a logic connection according to claim 7 **characterized in that** it further comprises:
- said at least one processing decision-taking node (N4, N9) adding information (sp4, sp9) related to said determined spectral path(s) (CH1 to CH5) to the reservation request (RQ1t);
- said final node (Nf) selecting the best spectral paths from among the spectral paths (CH2, CH5) proposed by said at least one processing decision-taking node; and
- said final node (Nf) sending a return message (RESV) so as to validate the reservation of wavelength(s), back to the initial node (Ni).

10. A method of setting up a logic connection according to claim 9 **characterized in that** the return message contains appropriate information for configuring each decision-taking node (N4, N9) and also contains information for configuring any transit node(s), possibly as modified (N1, N7).

## Patentansprüche

1. Verfahren zur Errichtung einer logischen Verbindung zwischen einem Startknoten (Ni) und einem nicht angrenzenden Endknoten (Nf) in einem Telekommunikationsnetz (T), wobei das Verfahren die unten stehenden, aufeinander folgenden Schritte umfasst:
- Festlegung einer räumlichen Strecke (ROUTE1), die den Startknoten und den Endknoten miteinander verbindet, wobei die räumliche Strecke mindestens einen so genannten Transitknoten (N1, N4, N6, N9) umfasst, der zwischen den Start- und Endknoten geschaltet ist, sowie eine Reihe von Streckensegmenten, die die genannten Knoten paarweise miteinander verbinden,
- Übermittlung einer Reservierungsanfrage (RQ1, RQA) in Bezug auf die räumliche Strecke durch den Startknoten, wobei die Anfrage charakteristischen Parameterwerte für die Verbindung enthält, mindestens den ersten Transitknoten (N1) der räumlichen Strecke passiert und deren Endziel der Endknoten darstellt,
**dadurch gekennzeichnet, dass** es zudem den folgenden Schritt umfasst:
- automatische Berechnung in einem als Entscheidungsknoten (N4, N9) bezeichneten Transitknoten auf der Basis von lokalen Informationen, wobei das Berechnungsergebnis (c4, sp4, sp9, t4, spA, spB) in der Lage ist, mindestens einen der Werte für die Verbindungsparameter zu ändern.

2. Verfahren zur Errichtung einer logischen Verbindung gemäß Anspruch 1, **dadurch gekennzeichnet, dass** es die Verarbeitung der Anfrage (RQ1, RQ1t, RQA) im Entscheidungsknoten (N4, N9) auf der Basis der genannten Berechnung (c4, sp4, sp9, t4) beinhaltet.

3. Verfahren zur Errichtung einer logischen Verbindung gemäß Anspruch 2, **dadurch gekennzeichnet, dass** die Verarbeitung der Anfrage (RQ1, RQ1t) in einer Implementierung des Berechnungsergebnisses (c4, sp4, sp9) besteht und vorzugsweise eine Synthese von Werten für die Verbindungsparameter beinhaltet.

4. Verfahren zur Errichtung einer logischen Verbindung gemäß einem der Ansprüche 1 bis 3, **dadurch gekennzeichnet, dass** die Auswahl des oder der Entscheidungsknoten (N4, N9) bei der Festlegung der räumlichen Strecke (ROUTE1) oder durch eigene Festlegung erfolgt.

5. Verfahren zur Errichtung einer logischen Verbindung gemäß einem der Ansprüche 1 bis 4, **dadurch gekennzeichnet, dass** die Berechnung (c4, sp4, sp9, t4, spA, spB) auf der Basis von lokalen Informationen in Bezug auf mindestens eines der folgenden Kriterien durchgeführt wird: maximale Größe der übertragbaren Anfrage, Verfügbarkeit von verteilten Ressourcen, lokale Bereitstellungspolitik in der Netzwerkverwaltungsebene, Störung, Netzwerkschutz, Dienstgüte.

6. Verfahren zur Errichtung einer logischen Verbindung gemäß einem der Ansprüche 1 bis 5, **dadurch gekennzeichnet, dass** das Berechnungsergebnis (c4) eine Änderung von Segmenten der räumlichen Strecke (ROUTE1), ausgehend vom Entscheidungsknoten (N4) beinhaltet.

7. Verfahren zur Errichtung einer logischen Verbindung gemäß einem der Ansprüche 1 bis 6, **dadurch gekennzeichnet, dass** jedes räumliche Streckensegment in der Lage ist, eine Vielzahl von Wellenlängen zu unterstützen, die jeweils ein Segment der Spektralstrecke darstellen, wobei das Verfahren einen Schritt zur Festlegung von Kandidaten-Spektralstrecken für die genannte, eventuell geänderte räumliche Strecke (ROUTE1, ROUTE1') umfasst und Folgendes beinhaltet:
- Auf der Basis der genannten Berechnung (sp4, sp9, spA, spB) in mindestens einem als Verarbeitungsknoten bezeichneten Entscheidungsknoten (N4, N9) Festlegung mindestens einer Spektralstrecke (CH1 bis CH5, CHA bis CHE) zwischen dem genannten Verarbeitungs-/Entscheidungsknoten und einem vorhergehenden Entscheidungsknoten (N4) in der Strecke oder gegebenenfalls dem Startknoten (Ni).

8. Verfahren zur Errichtung einer logischen Verbindung gemäß Anspruch 7, **dadurch gekennzeichnet, dass** es sich bei jedem Entscheidungsknoten (N4, N9) um einen Verarbeitungs-/Entscheidungsknoten handelt, sowie **dadurch**, dass das Verfahren Folgendes umfasst:
- eventuelle Ergänzung der Reservierungsanfrage (RQA) mit Informationen (i1') über die Verbindung, die in mindestens einem Transitknoten (N1) erfasst wurden,
- Versand einer Rückmeldung (RESV1), um die Reservierung von Wellenlängen zu validieren, wobei die genannte Meldung, die im letzten Entscheidungsknoten (N9) ankommt, die erforderliche Konfiguration für die letzte Spektralstrecke (CHF) angibt, die sich zwischen dem letzten Entscheidungsknoten und dem genannten Endknoten (Nf) befindet.
- gegebenenfalls Auswahl der besten Spektralstrecke (CHC) aus allen festgelegten Kandidaten-Spektralstrecken (CHC bis CHE) im letzten Entscheidungsknoten (N9),
- Versand der Rückmeldung (RESV2) durch den letzten Entscheidungsknoten (N9), um die Reservierung von Wellenlängen zu validieren, wobei die Meldung durch die Angabe der erforderlichen Konfiguration für die genannte beste Spektralstrecke (CHC) ergänzt wird und im vorletzten Entscheidungsknoten (N4) oder gegebenenfalls im Startknoten ankommt,
- gegebenenfalls Ergänzung der beiden vorgenannten Schritte durch ähnliche Schritte für jeden der verbleibenden Entscheidungsknoten (N4) bis zur Bestätigung der Validierung der Reservierung von Wellenlängen im Startknoten (Ni).

9. Verfahren zur Errichtung einer logischen Verbindung gemäß Anspruch 7, **dadurch gekennzeichnet, dass** es zudem umfasst:
- Ergänzung der Reservierungsanfrage (RQ1t) in dem genannten, mindestens einen verarbeitungs-/Entscheidungsknoten (N4, N9) durch Informationen (sp4, sp9) in Bezug auf den oder die genannten, festgelegten Spektralstrecken (CH1 bis CH5),
- Auswahl in dem genannten Endknoten (Nf) der besten Spektralstrecken aus den von dem genannten, mindestens einen Verarbeitungs-/Entscheidungsknoten vorgeschlagenen Spektralstrecken (CH2, CH5),
- Versand einer Rückmeldung (RESV) durch den genannten Endknoten (Nf) an den Startknoten (Ni), um die Reservierung von Wellenlängen zu validieren.

10. Verfahren zur Errichtung einer logischen Verbindung gemäß Anspruch 9, **dadurch gekennzeichnet, dass** die Rückmeldung entsprechende Informationen zur Konfiguration jedes Entscheidungsknotens (N4, N9) beinhaltet und außerdem Informationen zur Konfiguration des oder der möglicherweise geänderten, eventuellen Transitknoten (N1, N7) beinhaltet.
